# EUROPEAN PATENT SPECIFICATION

(11) **EP 1 649 973 B1**
(45) Date of publication and mention of the grant of the patent: **02.09.2009**
(21) Application number: 04747280.8
(22) Date of filing: 09.07.2004
(51) Int. Cl.: B23Q 3/00, B23Q 1/00

(54) **CLAMP DEVICE**
KLEMMVORRICHTUNG
DISPOSITIF SERRANT

(30) Priority: 25.07.2003 JP 2003279714
(43) Date of publication of application: 26.04.2006
(73) Proprietor: Kosmek Ltd., Kobe-shi, Hyogo 651-2241 (JP)
(72) Inventor: YONEZAWA, Keitaro, c/o KOSMEK LTD., Kobe-shi, Hyogo 6512241 (JP); YOSHIMURA, Gaku, c/o KOSMEK LTD., Kobe-shi, Hyogo 6512241 (JP); HARUNA, Yosuke, c/o KOSMEK LTD., Kobe-shi, Hyogo 6512241 (JP); YAMADA, Hironori, c/o KOSMEK LTD., Kobe-shi, Hyogo 6512241 (JP)
(74) Representative: Horton, Andrew Robert Grant
(86) International application number: PCT/JP2004/009812
(87) International publication number: WO 2005/009676

(56) References cited:
- JP-A- 2001 038 564
- JP-A- 2003 097 519
- JP-A- 2003 181 730
- JP-A- 2003 311 572
- JP-A- 2004 223 702

## Description

The present invention relates to an apparatus for clamping a second block such as a work pallet or a work on a first block such as a table of a machine tool.

The document JP-2003-97519 describes a clamping apparatus in which horizontal misalignment is absorbed by engaging a tapered inner peripheral surface of a work pallet with a tapered outer peripheral surface of a plug projected from a table. In addition, a pull rod inserted into the plug pulls the work pallet *via* a plurality of balls to fix the work pallet to the table.
The invention is defined in the claims. The main claim is characterized with respect to the document JP-2001-038564, which describes a clamping apparatus generally similar to that shown in JP-2003-97519.

The prior art has a problem of a complicated construction since a misalignment absorbing mechanism and a clamping mechanism are provided individually.
It is an object of the present invention to provide a clamping apparatus that solves the problem.

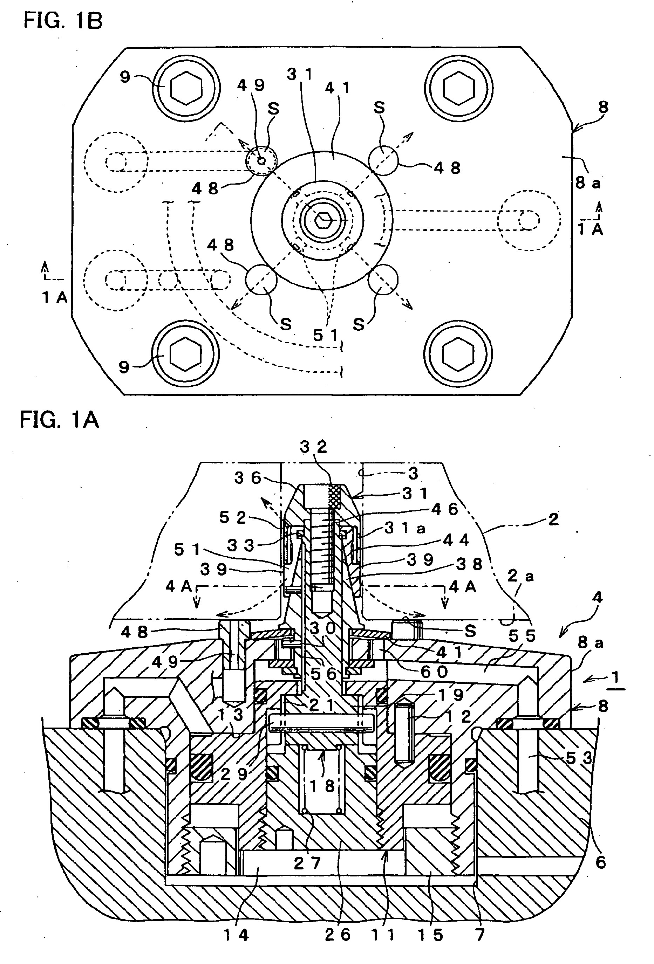

In order to accomplish the object mentioned above, the present invention provides clamping apparatuses as described below and as illustrated in Fig. 1A through Fig. 4B, Fig. 5A and Fig. 5B, Fig. 6A and Fig. 6B, Fig. 7A and Fig. 7B, Fig. 8, Fig. 10, or Fig. 11 respectively for example.

A first block 1 is provided with a support surface S that receives a supported surface 2a of a second block 2. A drive member 11 is inserted into the first block 1 axially movably. A pull rod 18 projects toward a leading end beyond the support surface S of the first block 1, and the pull rod 18 is connected to the drive member 11. An inner engaging member 38 is arranged on an outer periphery of the pull rod 18 axially movably. The inner engaging member 38 is adapted to be radially movable with respect to the first block 1, and the inner engaging member 38 is adapted to be advancable toward the leading end by pressing means 41. A plurality of outer engaging members 39 to be inserted into an engaging hole 3 of the second block 2 is arranged on an outer periphery of the inner engaging member 38. The outer engaging members 39 are adapted so as to wedge-engage with the inner engaging member 38 from the leading end side. An output portion 46 of the pull rod 18 is connected to these outer engaging members 39. The outer engaging members 39 are adapted to be radially inwardly movable by returning means 44.

The plurality of outer engaging members 39 may be directly engaged or indirectly engaged with the inner engaging member 38.
As the pressing means 41, an elastic member such as a spring or rubber, a fluid power piston, or a combination structure of these elastic member and fluid power piston can be employed.

The present invention functions as follows, for example, as illustrated in Fig. 1A through Fig. 4B.
In a released state of Fig. 1A (and Fig. 2 and Fig. 4A), the drive member 11 has moved the pull rod 18 toward the leading end, and the outer engaging members 39 has moved toward the leading end and radially contracted.
To fix the second block 2 to the first block 1, the engaging hole 3 is fitted onto the outer engaging members 39, and thereafter, the drive member 11 moves the pull rod 18 toward the base end, and the outer engaging members 39 gradually make a wadge engagement with the inner engaging member 38.

Then, first, the outer engaging members 39 diametrically expand via the inner engaging member 38 held at almost an advanced position by the pressing means 41, by which the outer engaging members 39 come into contact with the engaging hole 3. Next, the outer engaging members 39 diametrically expand while forcing the pressing means 41 to retreat toward the base end via the inner engaging member 38, and the outer engaging members 39 come into close contact with the engaging hole 3, and the outer engaging members 39 gradually forces the inner engaging member 38 to retreat toward the base end against the pressing means 41. Subsequently, when the inner engaging member 38 is directly or indirectly received by the first block 1 and the movement of the outer engaging members 39 toward the base end is blocked, the outer engaging members 39 make a strong wedge engagement with the inner engaging member 38 and expand, by which the outer engaging members 39 come into strong and close contact with the engaging hole 3. Thereby, the pull rod 18 strongly presses the supported surface 2a of the second block 2 against the support surfaces S of the first block 1 via the outer engaging members 39, which are in strong and close contact state with the engaging hole 3.

In a case where the axis of the engaging hole 3 and the axis of the pull rod 18 are misaligned from each other during the locking operation, a reaction force acts on each of the outer engaging members 39 by the engaging hole 3 during expansion of each of the outer engaging members 39, and the reaction force moves the inner engaging member 38 radially with respect to the first block 1. Thereby, the misalignment can automatically be canceled.

Therefore, the present invention provides a mechanically simple clamping apparatus including both a misalignment absorbing mechanism and a clamping mechanism.

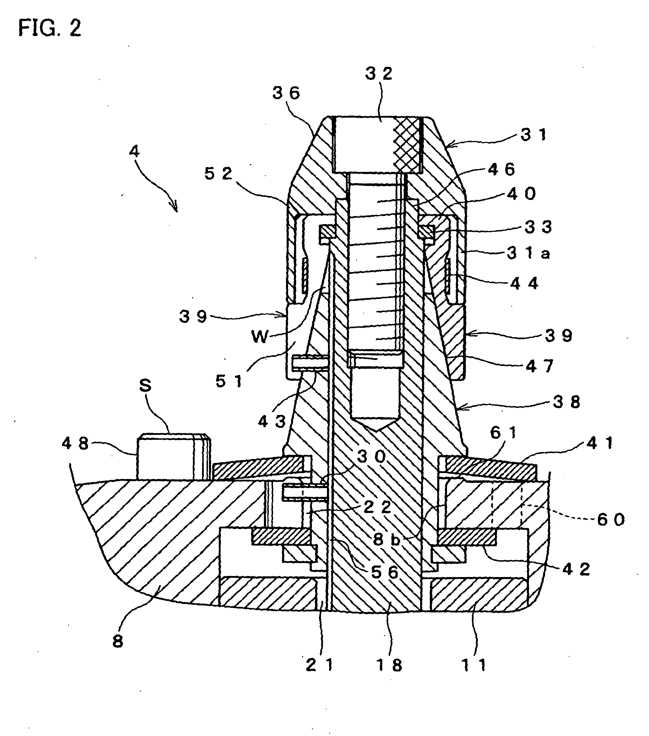

In the present invention, for example, as illustrated in Fig. 2, Fig. 5A, Fig. 6A, and Fig. 7A respectively, it is preferable that a cover member 31 that covers the plurality of outer engaging members 39 from the leading end side is provided on a leading end portion of the pull rod 18. In this case, leading end faces of the outer engaging members can be covered by the cover member provided on the pull rod, so that foreign matter can be prevented from entering between the outer engaging members and the inner engaging member. Therefore, the outer engaging members work smoothly for a long period of time.
It is noted that the cover member may be formed integrally with the pull rod or separately from the pull rod. The separately formed cover member may be fixed to the pull rod or supported on the pull rod.

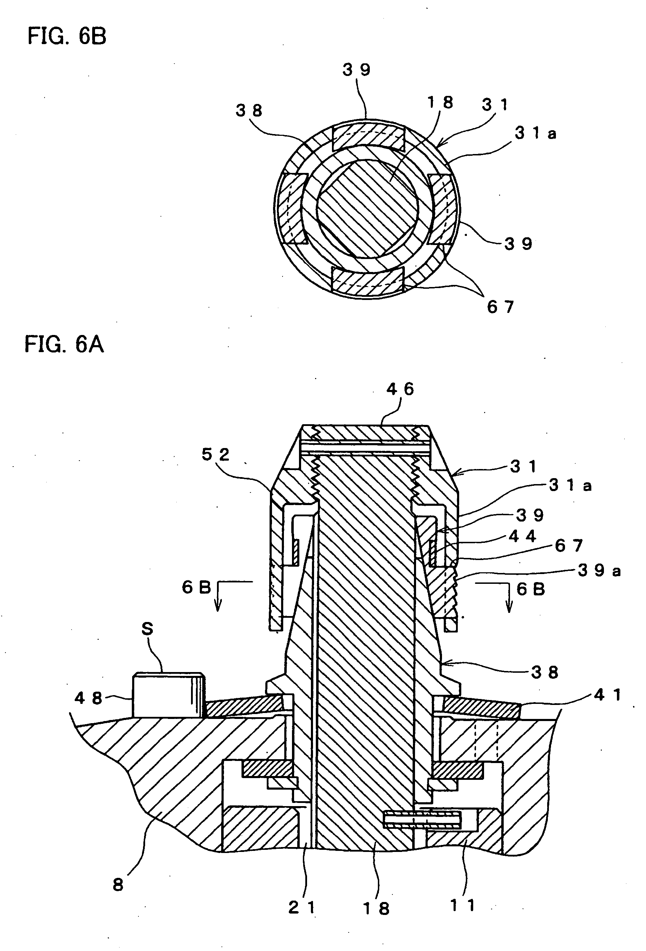

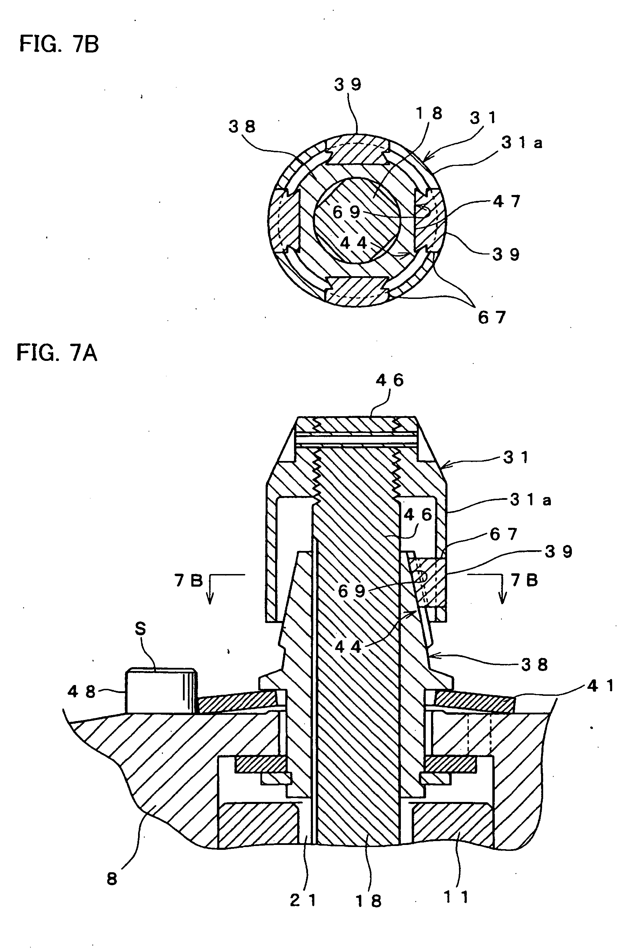

In the present invention, it is preferable that, as illustrated in the respective drawing described above, a guide surface 36 that narrows toward the leading end is formed on an outer periphery of the cover member 31. In this case, the engaging hole can be smoothly guided against the cover member by an action of the guide surface.
Furthermore, in the present invention, it is preferable that, as illustrated in the respective drawing described above, the cover member 31 and the outer engaging members 39 are connected radially relatively movably and axially movably together.
In addition, as illustrated in Fig. 6A or Fig. 7A described above, the outer engaging members 39 are supported on a peripheral wall 31a of the cover member 31 radially movably.

Furthermore, the present invention includes the following clamping apparatus.
For example, as illustrated in Fig. 1A, Fig. 1B, and Fig. 2, the first block 1 is provided with a plurality of the support surfaces S circumferentially at intervals, and with a gap between the adjacent outer engaging members 39 and 39 is formed a discharge port 51 for a cleaning fluid, and the discharge ports 51 are directed toward the support surfaces S respectively. In this case, the specified support surfaces can be strongly cleaned, so that the second block can be reliably seated on the first block with high accuracy.
In addition, in the present invention, it is preferable that the pull rod 18 is urged toward the leading end by a balancing elastic member 27. Thereby, the pull rod can be smoothly and reliably moved in the radial direction.

In the present invention, for example, as illustrated in Fig. 1A and Fig. 2, it is preferable that the pull rod 18 is connected to the drive member 11 radially movably. In this case, by setting the radial moving amount of the pull rod to be large, the radial moving amount of the outer engaging members connected to the output portion of the pull rod can also be made large.

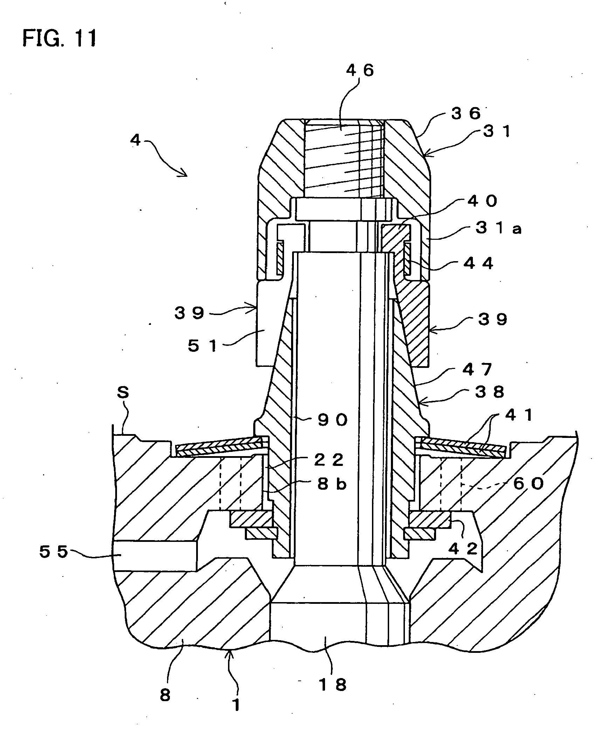

In the present invention, for example, as illustrated in Fig. 11, the inner engaging member 38 is arranged radially movably with respect to the pull rod 18. In this case, the structure to radially move the outer engaging members engaged with the inner engaging member becomes mechanically simple.

### Brief Description of the Drawings

Fig. 1A through Fig. 4B illustrate a first embodiment according to the present invention.
Fig. 1A is an elevational sectional view illustrating a released state of a clamping apparatus, corresponding to a view indicated by the arrow 1A-1A in Fig. 1B;
Fig. 1B is a plan view of the clamping apparatus;
Fig. 2 is a partial enlarged view in Fig. 1A;

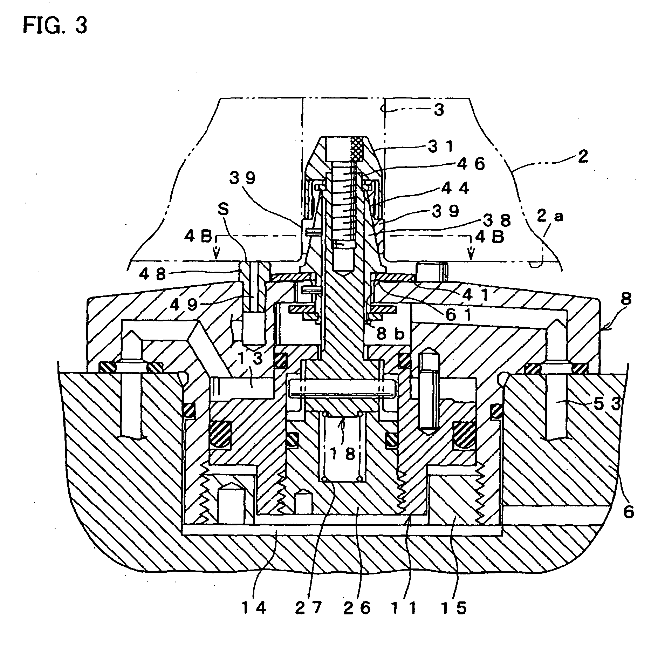

Fig. 3 is a view similar to Fig. 1A, illustrating a locked state of the clamping apparatus;

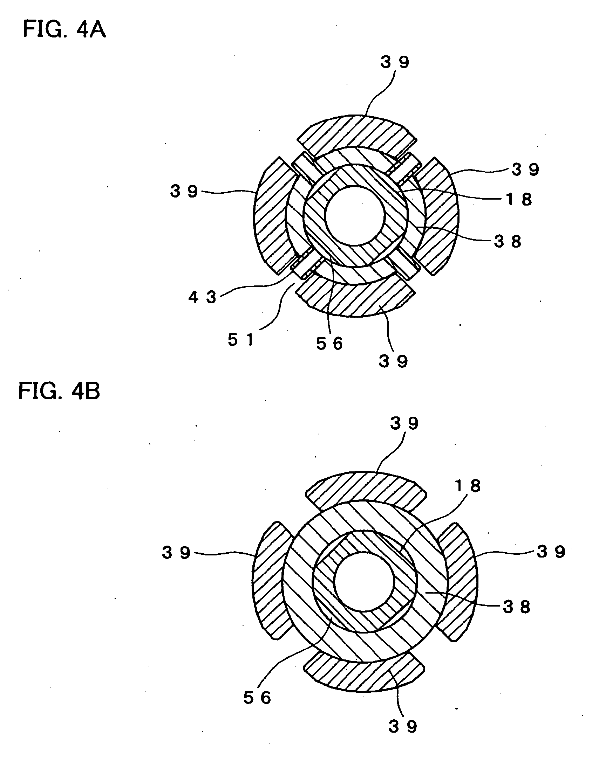

Fig. 4A is an enlarged sectional view indicated by the arrow 4A-4A in Fig. 1; and
Fig. 4B is an enlarged sectional view indicated by the arrow 4B-4B in Fig. 3.

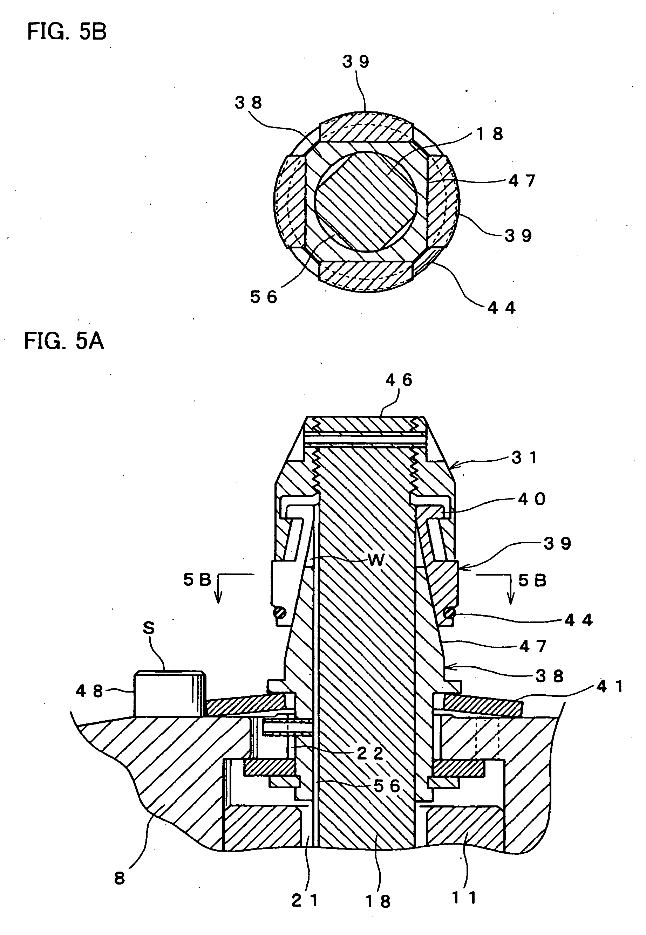

Fig. 5A and Fig. 5B illustrate a second embodiment according to the present invention.
Fig. 5A is a view similar to Fig. 2; and
Fig. 5B is a sectional view indicated by the arrow 5B-5B in Fig. 5A.

Fig. 6A and Fig. 6B illustrate a third embodiment according to the present invention.
Fig. 6A is a view similar to Fig. 2; and
Fig. 6B is a sectional view indicated by the arrow 6B-6B in Fig. 6A.

Fig. 7A and Fig. 7B illustrate a fourth embodiment according to the present invention.
Fig. 7A is a view similar to Fig. 2; and
Fig. 7B is a sectional view indicated by the arrow 7B-7B in Fig. 7A.

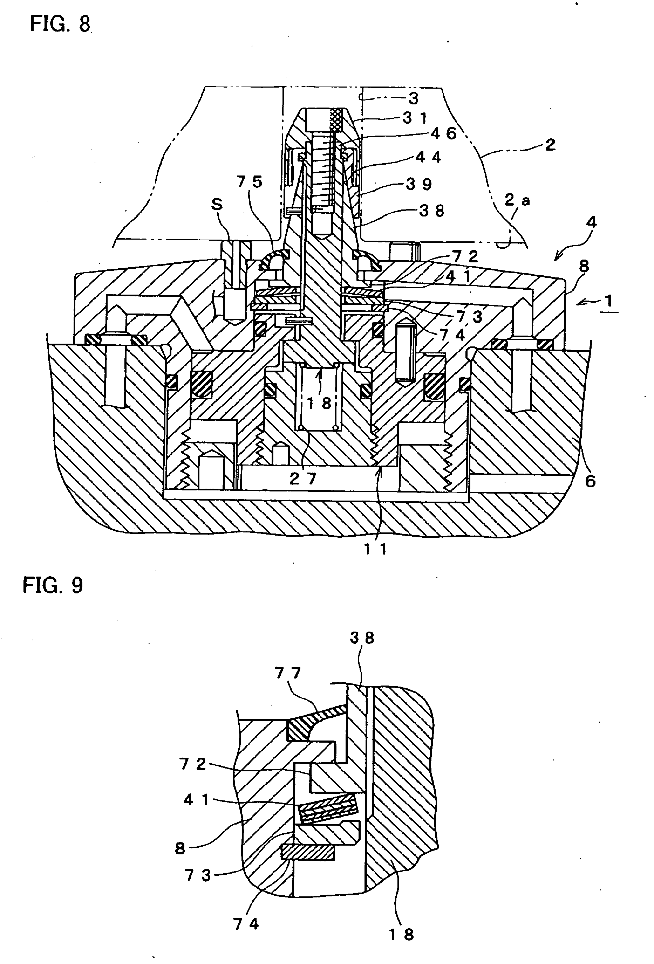

Fig. 8 is a view similar to Fig. 1A, illustrating a fifth embodiment according to the present invention;
Fig. 9 is a view illustrating an exemplified variation of the fifth embodiment, corresponding to a partial enlarged view in Fig. 8;

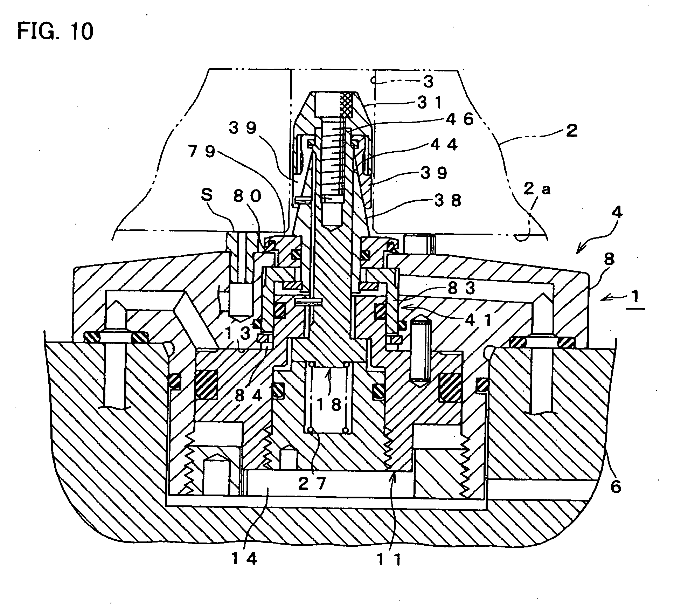

Fig. 10 is a view similar to Fig. 1A, illustrating a sixth embodiment according to the present invention; and
Fig. 11 is a view similar to Fig. 2, illustrating a seventh embodiment according to the present invention.

### Explanation of References

1: first block
2: second block (work pallet), 2a: supported surface,
3: engaging hole,
11: drive member (drive piston)
18: pull rod,
27: balancing elastic member,
31: cover member, 31a: peripheral wall,
36: guide surface,
38: inner engaging member,
39: outer engaging member,
41: pressing means (coned disc spring, push-up piston),
44: returning means (spring, fitting structure),
46: output portion,
51: discharge port,
S: support surface

### Best Mode for Carrying Out the Invention

Fig. 1A through Fig. 4B illustrate the first embodiment according to the present invention.
First, the entire structure of the clamping apparatus is explained with reference to Fig. 1A and Fig. 1B. Fig. 1A is an elevational sectional view illustrating a released state of the clamping apparatus, corresponding to a view indicated by the arrow 1A-1A in Fig. 1B. Fig. 1B is a plan view of the clamping apparatus.

In this first embodiment, a first block 1 is placed on a table of a machine tool, and a work pallet 2 as a second block is received by and fixed to the first block 1.
In a supported surface 2a of the work pallet 2 are opened engaging holes 3 defined by circular straight holes. Herein, only one of the engaging holes 3 is illustrated. The first block 1 is provided with plug means 4 corresponding to the engaging holes 3.
The first block 1 has a base plate 6 and a housing 8 fitted into an installation hole 7 of the base plate 6. A flange 8a of the housing 8 is fixed to the base plate 6 by a plurality of tightening bolts 9.

The plug means 4 is arranged as follows.
A cylindrical drive piston (drive member) 11 is inserted into the housing 8 axially movably. Herein, a first rotation stopper pin 12 prevents the piston 11 from rotating around its axis. A lock chamber 13 is formed above the drive piston 11, and a release chamber 14 is formed below the piston 11.
It is noted that a male screw cylinder 15 is screwed into a lower portion of the housing 8 in a height adjustable manner.

Into the upper half of the cylindrical hole of the piston 11, an input portion 19 provided at the lower half of the pull rod 18 extending vertically is inserted radially movably and axially unmovably.
In more detail, between an outer peripheral surface of the input portion 19 and the piston 11 is formed a first annular gap 21. To smoothly move the pull rod 18 radially, a cover bolt 26 is screwed into the lower half of a cylindrical hole of the piston 11 in a height adjustable manner, and a balancing spring (elastic member) 27 is attached between the cover bolt 26 and the pull rod 18. In addition, an upward force of the spring 27 and the weight of the pull rod 18 or the like are intentionally balanced.

In this first embodiment, rotation of the pull rod 18 around its axis is blocked by a second rotation stopper pin 29. Thereby, the pull rod 18 is adapted to be radially movable along the axis of the rotation stopper pin 29.

The detailed structure of the plug means 4 will be described based on Fig. 2 through Fig. 4B with reference to Fig. 1A and Fig. 1B. Fig. 2 is a partial enlarged view in Fig. 1A. Fig. 3 is a view similar to Fig. 1A, illustrating a locked state of the clamping apparatus. Fig. 4A is an enlarged sectional view indicated by the arrow 4A-4A in Fig. 1A. Fig. 4B is an enlarged sectional view indicated by the arrow 4B-4B in Fig. 3.

A cylindrical inner engaging member 38 is supported on an outer periphery of the pull rod 18 vertically movably, and between an outer peripheral surface of the lower half of the inner engaging member 38 and a through hole 8b of the housing 8 is formed a second annular gap 22. Thereby, the inner engaging member 38 is adapted to be radially movable with respect to the housing 8. Rotation of the inner engaging member 38 around its axis is blocked by a third rotation stopper pin 30. It is noted that, in this first embodiment, the upper half of the pull rod 18 is formed into a roughly square shape in a cross sectional view. Thereby, between an outer peripheral surface of the pull rod 18 and an inner peripheral surface of the inner engaging member 38 is formed a vertical passage 56 for compressed air for cleaning, as described later.

Furthermore, the inner engaging member 38 is advanced upward by a coned disc spring (pressing means) 41, and the inner engaging member 38 is prevented from ascending by more than a predetermined range by a stopper 42. The coned disc spring 41 covers openings such as the through hole 8b of the housing 8 and the vertical hole 60 described later from above.

Four outer engaging members 39 to be inserted into the engaging holes 3 of the work pallet 2 are arranged on an outer periphery of the inner engaging member 38 circumferentially at intervals. The outer engaging members 39 are adapted so as to wedge-engage with the inner engaging member 38 from above, and an output portion 46 of the pull rod 18 is connected to these outer engaging members 39.

In more detail, a cap-shaped cover member 31 is fixed to an upper portion of the pull rod 18 by a bolt 32, and between an upper portion of the cover member 31 and a ring 33 supported on an upper portion of the pull rod 18 are inserted upper flanges 40 of the outer engaging members 39 radially movably while their vertical relative movements are blocked.

Guide pins 43 are projected from the outer periphery of the inner engaging member 38, and the pin projecting portions are inserted between the adjacent outer engaging members 39 and 39 respectively. Thereby, the outer engaging members 39 are guided vertically.
Furthermore, a ring-shaped flat spring (returning means) 44 is attached to outer peripheral surfaces of the outer engaging members 39. The flat spring 44 urges each of the outer engaging members 39 radially inward.
It is noted that on an outer periphery of the upper half of the cover member 31 is formed a tapered guide surface 36 that narrows upward.

Four support rods 48 are press-fitted circumferentially at intervals into an upper surface of the housing 8. The support surfaces S provided on the upper surfaces of the support rods 48 is adapted so as to receive the supported surface 2a of the work pallet 2. Herein, the support rods 48 are arranged with phases corresponding to the projecting directions of the guide pins 43 respectively. The pull rod 18 is projected further upward than the support surfaces S.

In an arbitrary support rod 48 of the four support rods 48 is opened a detection nozzle hole 49 for seating confirmation, and to the detection nozzle hole 49 is adapted compressed air for detection to be supplied. When the supported surface 2a comes into contact with the support surfaces S, the pressure in the detection nozzle hole 49 increases. It can be confirmed that the work pallet 2 is seated on the support rods 48 by detecting the increase in the pressure using a pressure switch or the like.
Furthermore, with a gap between the adjacent outer engaging members 39 and 39 is formed a discharge port 51 for compressed air for cleaning (a cleaning fluid), and the discharge ports 51 are directed toward the support surfaces S respectively. In the outer peripheral surface of the cover member 31 are opened other discharge ports 52 for compressed air for cleaning. In the base plate 6 is formed a supply port 53 for the compressed air.

The clamping apparatus arranged as above operates as follows and as mainly illustrated in Fig. 1A and Fig. 3.
In the released state as illustrated in Fig. 1A, pressurized oil in the lock chamber 13 has been discharged, and pressurized oil has been supplied to the release chamber 14. Thereby, the drive piston 11 has raised the pull rod 18, and the pull rod 18 has raised the outer engaging members 39 via the cover member 31 and the ring 33, resulting in that the outer engaging members 39 has been switched into a contracted state. The inner engaging member 38 has ascended by an advancing stroke by the coned disc spring 41 and slightly made a tapered engagement with the outer engaging members 39 or faced the outer engaging member 39 with small gaps left therebetween.

When the work pallet 2 is fixed to the first block 1, cleaning is performed in advance. Namely, as illustrated in Fig. 1A and Fig. 1B, when compressed air for cleaning is supplied to the supply port 53 in the base plate 6, the compressed air passes through a horizontal passage 55 inside the housing 8 and the vertical passage 56 formed in outer periphery of the pull rod 18 in the recited order, and is powerfully discharged radially outward from each of the discharge ports 51, and the discharged compressed air cleans each of the four support surfaces S.

It is noted that the compressed air for cleaning is also supplied to the vertical hole 60 formed in a peripheral wall of the through hole 8b of the housing 8, and the compressed air can be discharged horizontally from a gap between an upper end of the coned disc spring 41 and the inner engaging member 38 or a gap between a lower end of the coned disc spring 41 and the housing 8.

Thereafter, as illustrated by the alternate long and short double dashed line in Fig. 1A, the work pallet 2 is lowered while keeping the releasing state, and the engaging hole 3 is fitted onto the plurality of outer engaging members 39. During descending of the work pallet 2, compressed air discharged from the other discharge port 52 diagonally upward can sufficiently clean the engaging hole 3.
Next, the pressurized oil in the release chamber 14 is discharged and pressurized oil is supplied to the lock chamber 13. Then, the piston 11 lowers the outer engaging member 39 via the pull rod 18, and the tapered inner peripheral surfaces of the outer engaging members 39 gradually make wedge-engagement with the tapered wedge surfaces 47 of the inner engaging member 38.

Then, the outer engaging members 39 expand via the inner engaging member 38 held substantially at an raised position by means of the urging force of the coned disc spring 41, and the outer engaging members 39 comes into contact with the engaging hole 3. Thereafter, the outer engaging members 39 expand while compressing the coned disc spring 41 downward via the inner engaging member 38, and come into close contact with the engaging hole 3, and simultaneously, the outer engaging members 39 force the inner engaging member 38 to retreat downward against the urging force of the coned disc spring 41. Successively, as illustrated in Fig. 3, the inner engaging member 38 is received by a projection 61 of the peripheral wall of the through hole 8b at the upper portion of the housing 8 via the coned disc spring 41. Then, the outer engaging members 39 are strongly wedge-engaged with the received inner engaging member 38 and expand, and the outer engaging members 39 come into strong and close contact with the engaging hole 3. Thereby, the pull rod 18 strongly presses the supported surface 2a of the work pallet 2 against the support surfaces S of the first block 1 via the outer engaging members 39, which are in the strong and close contact state with the engaging hole 3.

It is noted that, in a case where the support surfaces S of the first block 1 and the supported surface 2a of the second block 2 has come into perfect contact with each other at the beginning of the locking operation and that the supported surface 2a is received by the support surfaces S, the outer engaging members 39 operate as follows during the locking operation. After coming into close contact with the engaging hole 3, the outer engaging members 39 move the inner engaging member 38 downward against the coned disc spring (pressing means) 41, whereby moving downward while sliding on the engaging hole 3. Then, as described above, when the downward movement of the outer engaging members 39 are blocked, the outer engaging members 39 come into strong and close contact with the engaging hole 3 and strongly press the second block 2 against the first block 1.

On the other hand, in a case where, for some reason, a gap is left between the support surfaces S of the first block 1 and the supported surface 2a of the second block 2 at the beginning of the locking operation, the outer engaging members 39 operate as follows during locking operation. After coming into close contact with the engaging hole 3, the outer engaging members 39 in a close contact state move the second block 2 toward the first block 1 via the engaging hole 3. Then, as described above, when the downward movement of the outer engaging members 39 is blocked, the outer engaging members 39 come into strong and close contact with the engaging hole 3 and strongly press the second block 2 against the first block 1.

In a case where the axis of the engaging hole 3 and the axis of the pull rod 18 are misaligned from each other during the locking operation, a reaction force acts on each of the outer engaging members 39 by the engaging hole 3 during expansion of each of the outer engaging members 39, and the reaction force moves the pull rod 18 and the inner engaging member 38 radially with respect to the drive piston 11 and the housing 8. Thereby, the misalignment can automatically be canceled.

To switch the locked state to the released state, as described above, the pressurized oil in the lock chamber 13 is discharged and pressurized oil is supplied to the release chamber 14. Thereby, the drive piston 11 raises the outer engaging members 39 via the pull rod 18 and the outer engaging members 39 are contracted by the flat spring 44, resulting in that the locked state is released.

The first embodiment may be changed as follows.
Instead of providing the plurality of support surfaces S circumferentially, a support surface may be formed into a ring shape in a plan view on the upper surface of the flange 8a of the housing 8. One or a plurality of support surfaces S may be provided on the base plate 6 instead of being provided on the housing 8. The base plate 6 and the housing 8 may be formed integrally instead of separately (individually).
The balancing spring 27 is preferable for smooth horizontal movement of the pull rod 18, however, the balancing spring 27 can be omitted depending on use conditions of the clamping apparatus.
In the released state, as described above, it is preferable that a pre-load is not applied to the coned disc spring 41, however, it is also allowed that a small pre-load is applied to the coned disc spring 41 instead. The coned disc spring 41 may be replaced with a compression coil spring or rubber or the like.

Fig. 5A and Fig. 5B, Fig. 6A and Fig. 6B, Fig. 7A and Fig. 7B, Fig. 8, Fig. 10, and Fig. 11 illustrate second through seventh embodiments, respectively. In these embodiments, components similar to those of the first embodiment will be designated by the same numerals as a general rule.

Fig. 5A and Fig. 5B illustrate the second embodiment according to the present invention.
Fig. 5A is a view similar to Fig. 2. Fig. 5B is a sectional view indicated by the arrow 5B-5B in Fig. 5A, similar to Fig. 4A.
This second embodiment is different from the structure of Fig. 2 and Fig.
4A in the following points.
The upper flanges 40 are projected radially outward from the upper portions of the outer engaging members 39 respectively. The upper flanges 40 are supported on the cover member 31 radially movably and vertically unmovably.
The inner engaging member 38 is formed substantially into a square shape in a horizontal sectional view, and has four wedge surfaces 47 that get closer to the axis upward. With the wedge surfaces 47 are wedge-engaged the outer engaging members 39 respectively.
The four outer engaging members 39 are contracted by a rubber-made O-ring (returning means) 44.

Fig. 6A and Fig. 6B illustrate the third embodiment according to the present invention. Fig. 6A is a view similar to Fig. 2. Fig. 6B is a sectional view indicated by the arrow 6B-6B in Fig. 6A, similar to Fig. 4A.
This third embodiment is different from the structure of Fig. 2 and Fig.
4A in the following points.
In the peripheral wall 31 a of the cover member 31 is formed a plurality of support holes 67 circumferentially. In the support holes 67 are inserted the lower halves of the outer engaging members 39 radially movably, respectively. The ring-shaped flat spring (returning means) 44 is attached to the upper halves of the outer engaging members 39 in the inside space of the cover member 31. On outer peripheral surfaces of the outer engaging members 39 are formed saw-toothed engaging portions 39a respectively.
According to this third embodiment, in the locking operation, the saw-toothed engaging portions 39a of the outer engaging members 39 bite into the peripheral wall of the engaging hole (not illustrated herein) due to plastic deformation or elastic deformation and lower the engaging hole, by which the work pallet (not illustrated) can be strongly fixed.

Fig. 7A and Fig. 7B illustrate the fourth embodiment according to the present invention. Fig. 7A is a view similar to Fig. 2. Fig. 7B is a sectional view indicated by the arrow 7B-7B in Fig. 7A, similar to Fig. 4A.
This fourth embodiment is different from the structure of Fig. 2 and Fig. 4A in the following points.
In the peripheral wall 31a of the cover member 31 are opened four support holes 67 circumferentially at substantially the same intervals. The outer engaging members 39 are inserted into the support holes 67 radially movably, respectively.
On the outer periphery of the inner engaging member 38 are provided four inclined grooves 69 that get closer to the axis upward, circumferentially at substantially the same intervals. The inclined grooves 69 are formed into V shapes in a cross sectional view, and on their bottom walls are formed the wedge surfaces 47. The fitting structure between the peripheral walls of the inclined grooves 69 and the outer engaging members 39 forms the returning means 44.

Fig. 8 is a view similar to Fig. 1A, illustrating a fifth embodiment according to the present invention.
This fifth embodiment is different from the structure of Fig. 1A in the following points.
A lower flange 72 of the inner engaging member 38 is inserted into an upper portion of the housing 8 radially movably. The coned disc spring (pressing means) 41, a spring seat 73, and a retaining ring 74 are accommodated in the housing 8. An annular gap between the inner engaging member 38 and the housing 8 is covered by a rubber-made flexible cover 75. Thereby, foreign matter is reliably prevented from entering the inside of the housing 8.

Fig. 9 is a view illustrating an exemplified variation of the fifth embodiment, corresponding to a partial enlarged view in Fig. 8.
In this case, the annular gap between the inner engaging member 38 and the housing 8 is covered by a synthetic resin-made lip 77. The pressing means is composed of a plurality of coned disc springs 41 laminated vertically.

Fig. 10 is a view similar to Fig. 1A, illustrating the sixth embodiment of according to the present invention.
This sixth embodiment is different from the structure of Fig. 1A in the following points.
A sleeve 79 is hermetically fitted onto the lower half of the inner engaging member 38, and the sleeve 79 is adapted to be relatively radially movable with respect to the housing 8. Between an outer periphery of an upper portion of the sleeve 79 and the upper surface of the housing 8 is attached a synthetic resin-made lip 80.
Furthermore, the pressing means 41 is composed as follows. Between an upper portion of the housing 8 and an upper portion of the drive piston 11 is hermetically inserted a push-up piston 83. The lock chamber 13 is communicated with an operation chamber 84 below the push-up piston 83.

When pressurized oil is supplied to the lock chamber 13 during the locking operation, in the first half since the beginning of the pressurized oil's supply, an upward hydraulic pressure acting on the push-up piston 83 from the operation chamber 84 retains the inner engaging member 38 at an advanced position on the upper side via the push-up piston 83 and the sleeve 79. Then, in the latter half of the pressurized oil's supply, a great hydraulic pressure acting on a large area of the drive piston 11 strongly expands and lowers the plurality of outer engaging members 39 via the pull rod 18 against the upward force acting on the push-up piston 83.
It is noted that, in this sixth embodiment, the inner engaging member 38 is supported on the housing 8 via the sleeve 79, the push-up piston 83, and the pressurized oil of the operation chamber 84.

Fig. 11 is a view similar to Fig. 2, illustrating the seventh embodiment according to the present invention.
Fig. 11 is different from the structure of Fig. 1A and Fig. 2 in the following points.
In Fig. 1A and Fig. 2, between the outer peripheral surface of the lower portion of the pull rod 18 and the drive piston 11 is formed the first annular gap 21, and the pull rod 18 is connected to the piston 11 radially movably.
On the other hand, in Fig. 11, the pull rod 18 is supported on the housing 8 vertically movably and radially unmovably, and the pull rod 18 is formed integrally with the drive piston (not illustrated herein). An annular gap 90 is formed between an outer peripheral surface of the pull rod 18 and the inner engaging member 38, whereby the inner engaging member 38 is arranged radially movably with respect to the pull rod 18. The horizontal passage 55 for the cleaning fluid is communicated with the discharge ports 51 through the annular gap 90. The cover member 31 is screwed onto a male screw (output portion) 46 at the upper portion of the pull rod 18.
The construction of Fig. 11 is mechanically simpler than that of Fig. 1A and Fig. 2 in the structure that radially moves the outer engaging member 39 engaged with the inner engaging member 38.

The above-described embodiments and exemplified variations can be further changed as follows.
The outer engaging members 39 may be two, three, or five or more instead of the four presented as an example.
Shape of a wedge space W between the inner engaging member 38 and the outer engaging members 39 is not limited to the shape presented as an example, and a person skilled in the art can variously change it. For example, it is also allowed that an intermediate member is interposed between the wedge surface 47 of the inner engaging member 38 and the outer engaging members 39.

The method for driving the drive piston (drive member) 11 may be a hydraulic single-acting one instead of the hydraulic double-acting one presented as an example. In a case of the hydraulic single-acting method, a spring-lock type and a spring-release type may be employed. Furthermore, the pressure fluid to be used for locking or releasing may be a gas such as compressed air instead of pressurized oil.
The cleaning fluid may be a liquid instead of the compressed air presented as an example.

The combination of the first block and the second block may be the combination of a table of a machine tool and a work pallet, the combination of a work pallet and a jig base, the combination of a jig base and a work piece, or the combination of a working jig such as a welding jig and a working article such as a work piece, instead of the combination of the base plate 6 and the work pallet 2 presented as an example.

## Claims

1. A clamping apparatus, wherein a first block (1) is provided with a support surface (S) that receives a supported surface (2a) of a second block (2), a drive member (11) is inserted into the first block (1) axially movably, and a pull rod (18) projects towards a leading end beyond the support surface (S) of the first block (1), and the pull rod (18) is connected to the drive member (11);
***characterized in that**:*
an inner engaging member (38) is arranged on an outer periphery of the pull rod (18) axially movably; the inner engaging member (38) is adapted to be radially movable with respect to the first block (1); and the inner engaging member (38) is adapted to be advanceable towards the leading end by pressing means (41);
outer engaging members (39) to be inserted into an engaging hole (3) of the second block (2) are arranged in a plurality on an outer periphery of the inner engaging member (38); the outer engaging members (39) are adapted so as to wedge-engage with the inner engaging member (38) from the leading end side; and an output portion (46) of the pull rod (18) is connected to these outer engaging members (39); and
the outer engaging members (39) are adapted to be radially inwardly movable by returning means (44).

2. Clamping apparatus according to claim 1, wherein a cover member (31) that covers the outer engaging members (39) from the leading end side is provided on a leading end portion of the pull rod (18).

3. Clamping apparatus according to claim 2, wherein a guide surface (36) that narrows towards the leading end is formed on an outer periphery of the cover member (31).

4. Clamping apparatus according to claim 2 or 3, wherein the cover member (31) and the plurality of outer engaging members (39) are connected radially relatively movably and axially movably together.

5. Clamping apparatus according to any of claims 2 to 4, wherein the outer engaging members (39) are supported on a peripheral wall (31 a) of the cover member (31) radially movably.

6. Clamping apparatus according to any foregoing claim, wherein the first block (1) is provided with a plurality of support surfaces (S) circumferentially at intervals, and discharge ports (51) for a cleaning fluid are formed each within a respective gap between adjacent outer engaging members (39), each discharge port (51) being directed towards a respective one of the support surfaces (S).

7. Clamping apparatus according to any foregoing claim, wherein the pull rod (18) is urged towards the leading end by a balancing elastic member (27).

8. Clamping apparatus according to any foregoing claim, wherein the pull rod (18) is connected to the drive member (11) radially movably.

9. Clamping apparatus according to any foregoing claim, wherein the inner engaging member (38) is arranged radially movably with respect to the pull rod (18).

## Patentansprüche

1. Spannvorrichtung, wobei ein erster Block (1) mit einer Stützfläche (S) versehen ist, die eine abgestützte Fläche (2a) eines zweiten Blocks (2) aufnimmt, ein Antriebselement (11) in den ersten Block (1) axial beweglich eingesetzt ist und eine Zugstange (18) in Richtung eines Vorderendes über die Stützfläche (S) des ersten Blocks (1) hinaus vorsteht und die Zugstange (18) mit dem Antriebselement (11) verbunden ist;
**dadurch gekennzeichnet, dass**:
ein inneres Eingriffselement (38) an einem äußeren Umfang der Zugstange (18) axial beweglich angeordnet ist; das innere Eingriffselement (38) so ausgelegt ist, dass es in Bezug auf den ersten Block (1) radial beweglich ist; und das innere Eingriffselement (38) so ausgelegt ist, dass es durch ein Pressmittel (41) in Richtung des Vorderendes vorschiebbar ist;
in ein Eingriffsloch (3) des zweiten Blocks (2) einzusetzende äußere Eingriffselemente (39) in einer Vielzahl an einem äußeren Umfang des inneren Eingriffselements (38) angeordnet sind; die äußeren Eingriffselemente (39) so ausgelegt sind, dass sie mit dem inneren Eingriffselement (38) von der Vorderendseite aus in Keileingriff kommen; und ein Abtriebsteil (46) der Zugstange (18) mit diesen äußeren Eingriffselementen (39) verbunden ist; und
die äußeren Eingriffselemente (39) so ausgelegt sind, dass sie durch ein Rückstellmittel (44) radial einwärts beweglich sind.

2. Spannvorrichtung nach Anspruch 1, wobei ein Abdeckelement (31), das die äußeren Eingriffselemente (39) von der Vorderendseite abdeckt, an einem Vorderendteil der Zugstange (18) vorgesehen ist.

3. Spannvorrichtung nach Anspruch 2, wobei eine Führungsfläche (36), die sich in Richtung des Vorderendes verschmälert, an einem äußeren Umfang des Abdeckelements (31) ausgebildet ist.

4. Spannvorrichtung nach Anspruch 2 oder 3, wobei das Abdeckelement (31) und die Vielzahl von äußeren Eingriffselementen (39) radial relativ beweglich und axial miteinander beweglich verbunden sind.

5. Spannvorrichtung nach einem der Ansprüche 2 bis 4, wobei die äußeren Eingriffselemente (39) an einer Umfangswand (31a) des Abdeckelements (31) radial beweglich abgestützt sind.

6. Spannvorrichtung nach einem vorangehenden Anspruch, wobei der erste Block (1) auf dem Umfang mit einer Vielzahl von Stützflächen (S) in Intervallen versehen ist, und Auslassöffnungen (51) für ein Reinigungsfluid jeweils innerhalb eines jeweiligen Spalts zwischen benachbarten äußeren Eingriffselementen (39) ausgebildet sind, wobei jede Auslassöffnung (51) in Richtung einer jeweiligen der Stützflächen (S) gerichtet ist.

7. Spannvorrichtung nach einem vorangehenden Anspruch, wobei die Zugstange (18) durch ein elastisches Ausgleichselement (27) in Richtung des Vorderendes gedrängt wird.

8. Spannvorrichtung nach einem vorangehenden Anspruch, wobei die Zugstange (18) radial beweglich mit dem Antriebselement (11) verbunden ist.

9. Spannvorrichtung nach einem vorangehenden Anspruch, wobei das innere Eingriffselement (38) radial beweglich in Bezug auf die Zugstange (18) angeordnet ist.

## Revendications

1. Dispositif de serrage, dans lequel un premier bloc (1) est muni d'une surface de support (S) recevant une surface supportée (2a) d'un second bloc (2), un organe d'entraînement (11) est inséré dans le premier bloc (1) de manière à être mobile dans le sens axial, et une tige de traction (18) fait saillie en direction d'une extrémité avant au-delà de la surface de support (S) du premier bloc (1) et la tige de traction (18) est reliée à l'organe d'entraînement (11) ;
**caractérisé en ce que** :
un élément d'engagement interne (38) est disposé sur une périphérie extérieure de la tige de traction (18), de manière à être mobile dans le sens axial ; l'élément d'engagement interne (38) est conçu pour pouvoir se déplacer dans le sens radial par rapport au premier bloc (1) ; et l'élément d'engagement interne (38) est conçu pour pouvoir avancer vers l'extrémité avant grâce à des moyens d'appui (41) ;
des éléments d'engagement externes (39) destinés à être insérés dans un orifice d'engagement (3) du second bloc (2) sont disposés en une pluralité sur une périphérie extérieure de l'élément d'engagement interne (38) ; les éléments d'engagement externes (39) sont conçus de manière à s'emboîter en coin avec l'élément d'engagement interne (38) depuis le côté de l'extrémité avant ; et une partie de sortie (46) de la tige de traction (18) est reliée à ces éléments d'engagement externes (39) ; et
les éléments d'engagement externes (39) sont conçus pour pouvoir être mobiles vers l'intérieur dans le sens radial grâce aux moyens de retour (44).

2. Dispositif de serrage selon la revendication 1, dans lequel un élément de recouvrement (31) qui recouvre les éléments d'engagement externes (39) depuis le côté de l'extrémité avant est aménagé sur une partie de l'extrémité avant de la tige de traction (18).

3. Dispositif de serrage selon la revendication 2, dans lequel une surface de guidage (36) qui se rétrécit en direction de l'extrémité avant est formée sur une périphérie extérieure de l'élément de recouvrement (31).

4. Dispositif de serrage selon la revendication 2 ou la revendication 3, dans lequel l'élément de recouvrement (31) et la pluralité des éléments d'engagement externes (39) sont reliés ensemble de manière à être relativement mobiles dans le sens radial et mobiles dans le sens axial.

5. Dispositif de serrage selon l'une quelconque des revendications 2 à 4, dans lequel les éléments d'engagement externes (39) sont supportés sur une paroi périphérique (31a) de l'élément de recouvrement (31), de manière à être mobiles dans le sens radial.

6. Dispositif de serrage selon l'une quelconque des revendications précédentes, dans lequel le premier bloc (1) est muni d'une pluralité de surfaces de support (S) disposées à intervalles sur la circonférence et des orifices de décharge (51) pour un fluide de nettoyage sont formés chacun dans un espace vide respectif entre les éléments d'engagement externes (39) adjacents, chaque orifice de décharge (51) étant orienté vers une surface respective des surfaces de support (S).

7. Dispositif de serrage selon l'une quelconque des revendications précédentes, dans lequel la tige de traction (18) est sollicitée en direction de l'extrémité avant par un élément d'équilibrage élastique (27).

8. Dispositif de serrage selon l'une quelconque des revendications précédentes, dans lequel la tige de traction (18) est reliée à l'élément d'entraînement (11), de manière à être mobile dans le sens radial.

9. Dispositif de serrage selon l'une quelconque des revendications précédentes, dans lequel l'élément d'engagement interne (38) est configuré de manière à être mobile dans le sens radial par rapport à la tige de traction (18).
